# EUROPÄISCHE PATENTSCHRIFT

(11) **EP 0 919 294 B1**
(45) Veröffentlichungstag und Bekanntmachung des Hinweises auf die Patenterteilung: **22.03.2000**
(21) Anmeldenummer: 97120801.2
(22) Anmeldetag: 27.11.1997
(51) Int. Cl.: B07B 9/02, A21D 6/00

(54) **Verfahren zur Proteinanreicherung bei Cerealien, insbesondere Getreide und Hülsenfrüchte**
Method for the protein enrichment for cereals, in particular grain and pulses
Procédé pour l'enrichissement en protéine pour céréales, en particulier pour grain et légumineuses

(43) Veröffentlichungstag der Anmeldung: 02.06.1999
(73) Patentinhaber: HOSOKAWA ALPINE Aktiengesellschaft & Co. OHG, 86199 Augsburg (DE); Codrico BV, 3072 AJ Rotterdam (NL)
(72) Erfinder: Degant, Oskar, 86477 Adelsried (DE); Diedrich, Stefan Gerhard, 2931 RP Krimpen a/d Lek (NL)

(56) Entgegenhaltungen:
- EP-A- 0 555 901
- US-A- 3 897 909
- A.C. STRINGFELLOW ET AL: "Air Classification of Kansas Hard Red Winter Wheat Flours" THE NORTHWESTERN MILLER, 16.März 1964, Seiten 19-22, XP002063129
- C.R. JONES ET AL: "The Separation of Flour into Fractions of Different Protein Contents by Means of Air Classification" JOURNAL OF BIOCHEMICAL AND MICROBIOLOGICAL TECHNOLOGY AND ENGINEERING, Bd. I, Nr. 1, 1959, Seiten 77-98, XP002063130

## Beschreibung

Die Erfindung betrifft ein Verfahren zur Trennung von Cerealien, insbesondere Getreide und Hülsenfrüchte in eine proteinreiche und eine proteinarme Fraktion durch Mahlung und Windsichtung.

Das prinzipielle Verfahren zur Erzeugung einer proteinreichen und einer proteinarmen Fraktion durch Mahlung und Windsichtung, der sog. Proteinverschiebung oder Proteinanreicherung, gehört seit langer Zeit zum Stand der Technik. Bereits 1960 erfolgten erste Veröffentlichungen zu diesem Thema.

Anfangs beschäftigte man sich zunächst mit der Proteinverschiebung von Getreide, insbesondere Weizenmehl, später auch mit anderen Cerealien wie Erbsen und Bohnen.

Grundlage jeder Proteinverschiebung sind die Erkenntnisse über den Aufbau des Getreidekorns. Der Mehlkörper des Getreidekorns besteht aus Stärke und Protein, wobei die Stärke im wesentlichen aus runden Körnern besteht und Kornverbände bildet, die durch dazwischen eingelagertes Protein zusammengehalten werden.

Durch geeignete Zerkleinerungsvorrichtungen werden die Getreidekörner zerkleinert, wobei die Zerkleinerung derart erfolgen soll, daß die Kornverbände aus Stärke und Protein so weit aufgeschlossen werden bis Stärkekörner und Proteinteile getrennt nebeneinander vorliegen. Da die Stärkekörner eine sehr spezifische Kornform und Korngröße aufweisen und die Proteinteile nach der Zerkleinerung fast ausschließlich unter der Korngröße der Stärke vorliegen, ist eine Trennung in eine stärkereiche Fraktion und eine proteinreiche Fraktion durch Selektion nach der Korngröße möglich.

Die Zerkleinerung soll Mehl mit einer Korngröße von unter 40 - 60 um erzeugen, damit eine weitgehende Trennung der Protein-/Stärkekorn-Verbände erzielt werden kann. Bei einer derartigen Feinmahlung ist jedoch zu berücksichtigen, daß die Mehle eine hohe Empfindlichkeit gegen Überbeanspruchung aufweisen. Die Kräfte bei der Zerkleinerung dürfen nicht zu groß sein, damit die Stärkekörner unbeschädigt bleiben. Beschädigte Stärkekörner würden z.B. bei Getreidemehlen zu unterschiedlichen Backeigenschaften führen. Insbesondere ist man bestrebt bei der Proteinanreicherung sowohl in der Proteinfraktion als auch in der Stärkefraktion Schädigungen von Protein und Stärke zu vermeiden. Das Protein des Mehles ist zudem auch sehr temperaturempfindlich.

Aufgrund dieser Voraussetzungen wurden in der Vergangenheit fast ausschließlich Prallmühlen oder Strahlmühlen zur Zerkleinerung der Mehle eingesetzt. Nach den bisherigen Erkenntnissen erfahren die Mehlteilchen in diesen Mühlen nur kurzzeitige Beanspruchungen, so daß erwartet werden konnte, daß die Temperaturen unterhalb des kritischen Bereichs von ca. 50 °C für das Protein blieben. Die Zerkleinerung durch Prallbeanspruchung wurde bewußt bevorzugt, da man davon ausgegangen war, daß bei einer Zerkleinerung durch Druck- und Reibebeanspruchung, wie z.B. bei Walzenmühlen, Kugelmühlen oder Schwingmühlen, die Stärkekörner beschädigt würden. Die dabei erforderliche lange Verweilzeit des Mahlgutes in der Zerkleinerungszone wurde in Hinblick auf die Temperaturempfindlichkeit des Proteins zusätzlich als nachteilig angesehen.

Bei einem Verfahren zur Proteinanreicherung nach dem Stand der Technik wie er z.B. durch die EP 0 555 901 B1 offenbart ist, wird ein zweistufiges Mahlverfahren angewendet. Nach einer ersten Zerkleinerung des vollen Korns in ein grobes Mehl wird dieses angefeuchtet und anschließend nochmals vermahlen.

Die nochmalige Vermahlung soll das Endosperm mit seinen Stärkekörnern und daran angelagerten Proteinen in einer effizienteren Weise auftrennen. Dort wird vorgeschlagen das Mehl vor der nochmaligen Vermahlung anzufeuchten, um bessere Ergebnisse zu erlangen.

Für eine derartige Nachmahlung wird bevorzugt eine Strahlmühle oder Prallmühle verwendet. Obwohl die Strahlmühle als die Mühle angesehen wird, die zu den besten Ergebnissen führt, wird eine Prallmühle empfohlen, die einen geringeren Energiebedarf aufweist. Der Anteil der geschädigten Stärke beträgt dabei jedoch bis zu 8 Gew.%.

Die Separation von Cerealienmehlen in eine Proteinfraktion und eine Stärkefraktion wird um so schwieriger, je höher die Anforderungen an die Qualität der Protein- und Stärkefraktion sind.

Die zäh-plastischen Proteinanteile haften zum Teil an den harten, elastischen Stärkekörnern und können durch die erste Prallzerkleinerung nicht vollständig abgetrennt werden. Damit gelangen in der folgenden Trennung vermehrt proteinhaltige Anteile in die Stärkefraktion. Die Erfahrungen haben gezeigt, daß bei der Prallzerkleinerung selbst durch ein mehrfaches Nachmahlen die angelagerten Haftproteine nicht vollständig von der Stärke gelöst werden können. Bei der Strahlmahlung, die hohe Beschleunigungen der Teilchen ermöglicht kann das Haftprotein ausreichend gut von der Stärke gelöst werden, dies jedoch nur mit erheblichem energetischen Aufwand.

Der Erfindung liegt somit die Aufgabe zugrunde ein Verfahren zur Trennung von Cerealien, insbesondere Getreide und Hülsenfrüchte in eine proteinreiche und eine proteinarme Fraktion so zu verbessern, daß eine hohe Ausbeute der jeweiligen Fraktion unter sehr geringem energetischen Aufwand erzielt wird, wobei die Qualität der einzelnen Fraktionen nicht nachteilig beeinflußt wird.

Gelöst wird diese Aufgabe dadurch, daß in einem ersten Verfahrensschritt eine Vormahlung durch Prallzerkleinerung mit anschließender ersten Trennung nach der Korngröße stattfindet wodurch eine erste Grobgutfraktion und eine erste Feingutfraktion erhalten wird und in einem folgendem zweiten Verfahrensschritt eine selektive Mahlung der ersten Grobgutfraktion durch Druck- und Reibungsbeanspruchung in einer trockenen Rührwerkskugelmühle erfolgt und anschließend durch eine zweite Trennung nach der Korngröße eine zweite Grobgutfraktion und eine zweite Feingutfraktion erhalten wird, wobei durch die geeignete Wahl der Sichtereinstellungen aus der ersten und zweiten Feingutfraktion ein Auszug eines Proteinkonzentrates von insgesamt 30 bis 60 Gew. % des Ausgangsproduktes erhalten wird, das einen Proteinanteil von 45 bis 68% Protein i. Tr. des so erhaltenen Konzentrates aufweist. Vorteilhafte Ausgestaltungen sind den Unteransprüchen zu entnehmen.

Kern der Erfindung ist die Verwendung einer trockenen Rührwerkskugelmühle, wodurch eine Abreicherung der Stärkefraktion an Proteinen je nach Cerealie bis zu einem Restproteinanteil von 2% möglich wird. Der erforderliche Energiebedarf ist dabei im Verhältnis zu den üblich verwendeten Strahl- oder Prallmühlen sehr gering. Der energetische Vorteil bei der Mahlung mit einer trockenen Rührwerkskugelmühle zeigen sich insbesondere bei hohen Auszügen der proteinreichen Fraktionen mit hohem Proteinanteil. In einer vorteilhaften Ausgestaltung werden die Fraktionen nach dem ersten Verfahrensschritt befeuchtet, ehe sie im zweiten Verfahrensschritt erneut vermahlen werden. Dadurch kann auch eine gezielte Steuerung der Temperatur in der Rührwerkskugelmühle erfolgen.

Entgegen der bisherigen Ansicht der Fachwelt erfahren die Stärkekörner bei der Mahlung in einer trockenen Rührwerkskugelmühle nur geringe Schädigungen. Da die Rührwerkskugelmühle nur mit einer relativ geringen Drehzahl betrieben wird und somit keine zu hohe Erwärmung des Mehles stattfindet, tritt auch keine Schädigung des Proteins ein.

Die mittleren Umfangsgeschwindigkeiten liegen dabei erfahrungsgemäß zwischen 2 und 7 m/s und müssen den jeweilig verwendeten Cerealien angepaßt werden. Die jeweils ideale Umfangsgeschwindigkeit der Rührwerkskugelmühle kann durch wenige Versuche empirisch eingestellt und optimiert werden. Bei dem im folgenden aufgezeigten Beispiel der Proteinanreicherung bei Erbsen wurde eine mittlere Umfangsgeschwindigkeit von 3,5 m/s als vorteilhaft herausgefunden.

Fig. 1 zeigt das Fließbild einer zweistufigen Mahlung mit Sichtung bei Verwendung einer Prallmühle in der zweiten Mahlstufe.

Fig. 2 zeigt das Fließbild einer zweistufigen Mahlung mit Sichtung bei Verwendung einer Strahlmühle in der zweiten Mahlstufe.

Fig. 3 zeigt das Fließbild einer zweistufigen Mahlung mit Sichtung bei Verwendung einer erfindungsgemäßen Rührwerkskugelmühle in der zweiten Mahlstufe.

Fig.4 zeigt den Energieaufwand in Abhängigkeit zum gewünschten Proteinauszug für die drei Mühlentypen gemäß Figuren 1 bis 3.

Fig. 5 zeigt eine REM-Aufnahme eines Erbsen-Endosperms in 300facher Vergrößerung.

Fig.6 zeigt eine REM-Aufnahme der Stärkefraktion in 1000facher Vergrößerung nach der zweistufigen Mahlung auf einer Prallmühle.

Fig. 7 zeigt eine REM-Aufnahme der Stärkefraktion in 1000facher Vergrößerung nach der Mahlung mit einer Prallmühle in der ersten Stufe und mit einer Rührwerkskugelmühle in der zweiten Stufe.

In den Vergleichsbeispielen wurden geschälte Erbsen verwendet, die einen Proteingehalt von 25 % i.Tr. aufwiesen. Die Mahlung in der ersten Zerkleinerungsstufe erfolgte in gleicher Weise durch Prallmahlung mit Hilfe einer Zirkoplex® Sichtermühle ZPS 200 der HOSOKAWA ALPINE AG bei einer Drehzahl von 2200 U/min mit anschließender Sichtung durch einen Turboplex® Hochleistungswindsichter ATP 200 bei einer Drehzahl von 5300 U/min.

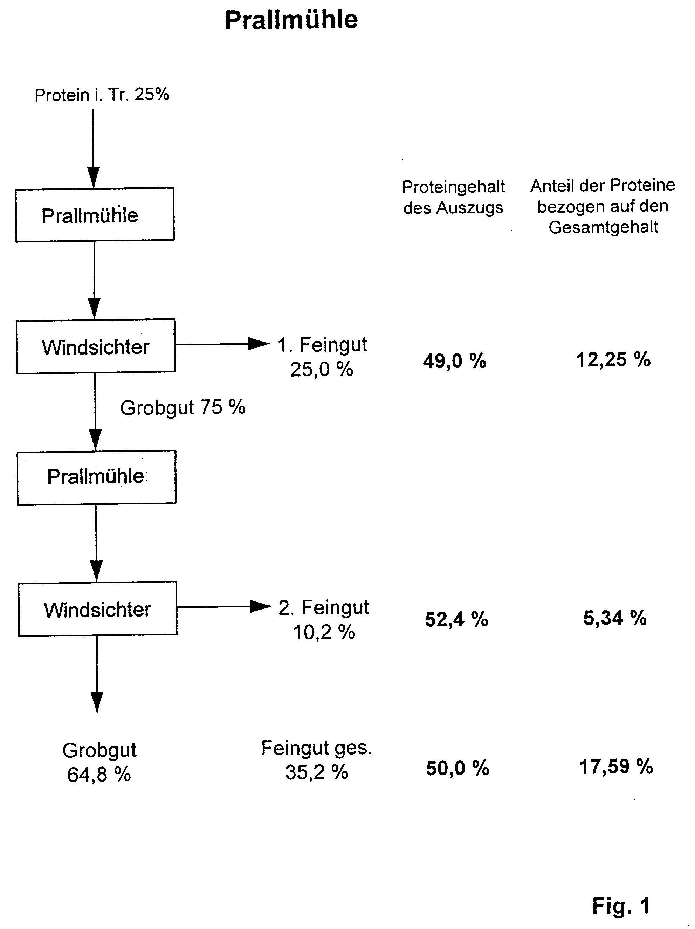

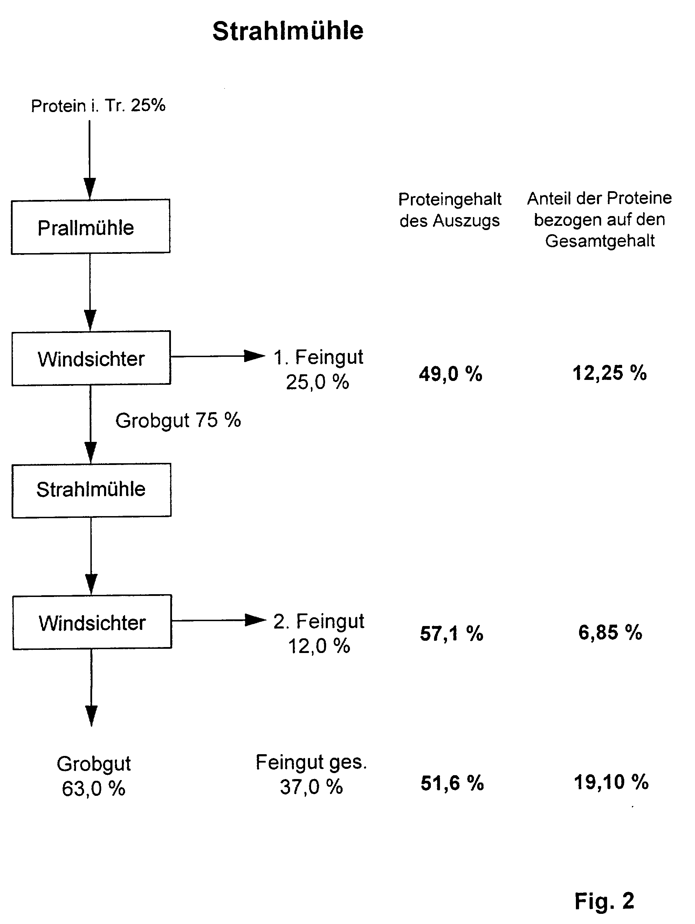

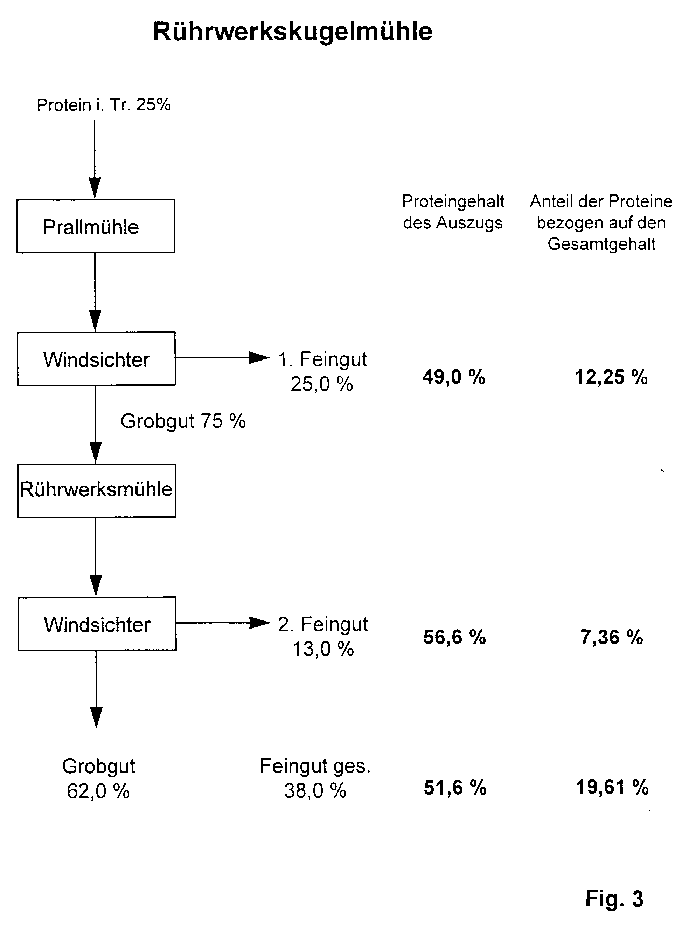

Das erhaltene Grobgut wurde dann gemäß Figuren 1 bis 3 in unterschiedlichen Mahlsystemen erneut vermahlen und anschließend gesichtet. Für die Prallmahlung wurde die gleiche Prallmühle wie für die Vormahlung verwendet. Als Strahlmühle wurde eine Fließbettstrahlmühle AFG 400 eingesetzt. Die Rührwerkskugelmühle ist eine ATR 150 der HOSOKAWA ALPINE AG und wurde mit einer Drehzahl von 450 U/min betrieben. Die zweite Windsichtung erfolgte durch einen Turboplex® Hochleistungswindsichter ATP 200 bei einer Drehzahl von 5500 U/min. Der Gesamtluftdurchsatz wurde bei allen Sichtungen auf 1200 m³/h eingestellt.

Im Vergleich zeigt sich, daß die zweite Mahlung mit einer Rührwerkskugelmühle gleich gute Ergebnisse liefert wie die Strahlmahlung. Die Prallmahlung liefert erwartungsgemäß etwas schlechtere Ausbeuten an Proteinen. Überraschenderweise sind die Ergebnisse der Mahlung mit Hilfe einer Rührwerkskugelmühle gleich gut wie bei der Strahlmahlung. Bisher wurden aber stets Strahlmühlen eingesetzt, obwohl diese einen sehr hohen Energieverbrauch aufweisen.

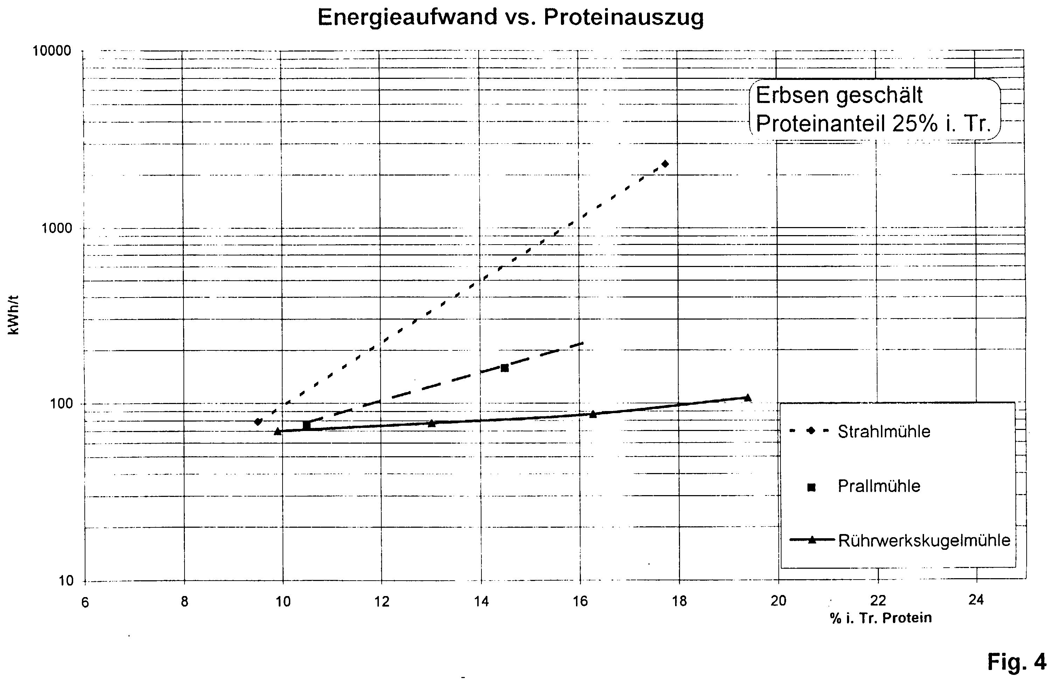

Fig. 4 zeigt den Vergleich der drei verschiedenen Mahlsysteme bezüglich des Energieaufwandes der benötigt wird, um einen bestimmten Proteinauszug zu erhalten. Zur vereinfachten Darstellung wurde ein logarithmischer Maßstab für den Energieaufwand aufgetragen. Aus diesem Diagramm wird deutlich wie hoch der Energieaufwand bei der Strahlmahlung ist und daß die Mahlung mit einer Rührwerkskugelmühle den geringsten Energieaufwand aufweist. Dieser ist noch geringer als der Energieaufwand bei der Prallmahlung.

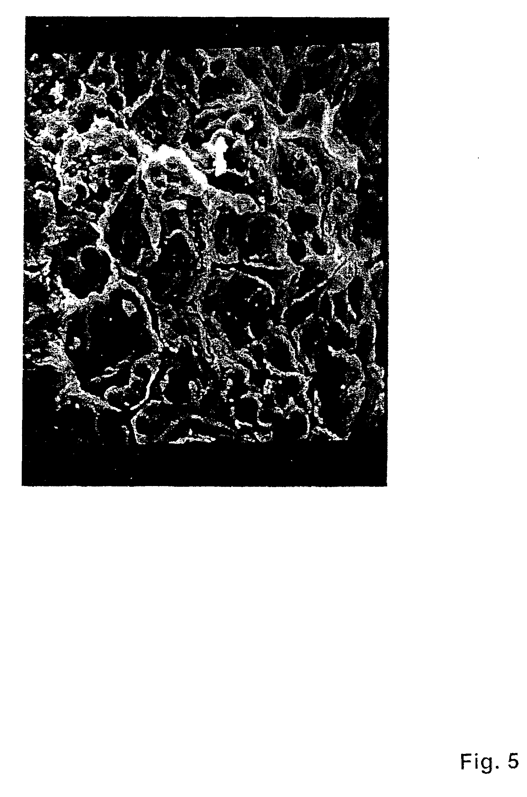

Zur Beurteilung der Qualität des erhaltenen Produktes wurden REM-Aufnahmen angefertigt. Fig.5 zeigt eine Aufnahme eines Erbsen-Endosperms aus dem Aufgabegut der geschälten Erbsen. Man erkennt deutlich die nahezu kugeligen Stärkekörner, die in das Protein eingelagert sind und von diesem vollständig umschlossen wird.

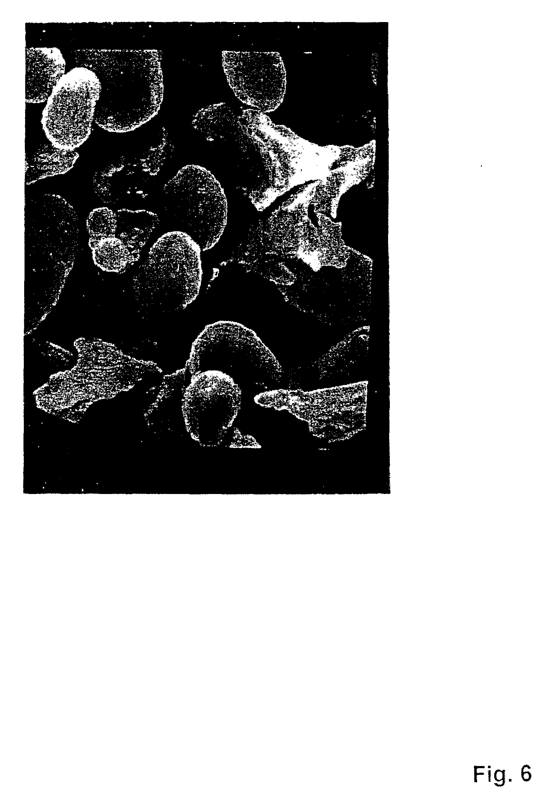

Fig. 6 zeigt die Stärkefraktion nach der zweistufigen Mahlung auf einer Prallmühle. Hier sind noch hohe Anteile an Proteinen in der Stärkefraktion enthalten. Zum einen sind Proteinanteile zu erkennen, die noch in einer sehr großen Korngröße vorliegen, da sie unzureichend zerleinert wurden und somit nicht durch die Feinstsichtung von der Stärkefraktion abgetrennt werden konnten. Andererseits sind auch Proteinanteile zu erkennen die zwar in nahezu ausreichend kleiner Korngröße vorliegen, aber noch fest mit Stärkekörnern zusammenhaften. Diese sog. Haftproteine können durch die Prall- oder Strahlmahlung nicht vollständig von den Stärkekörnern abgetragen werden und verbleiben somit in der Stärkefraktion.

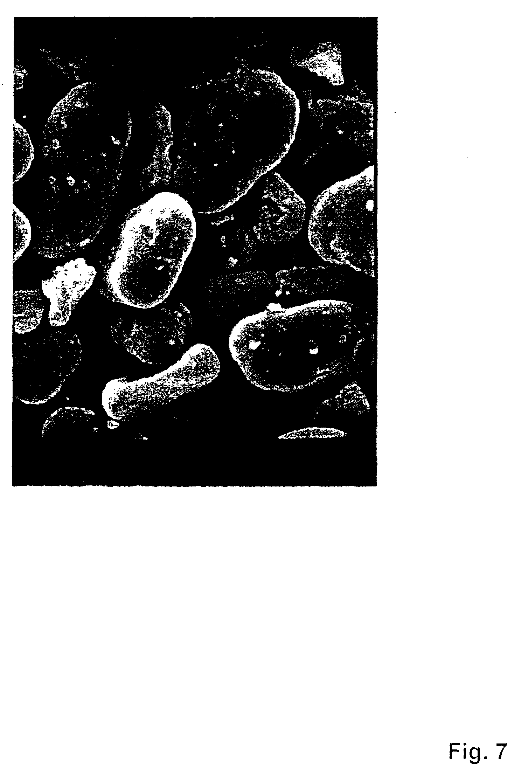

Fig. 7 zeigt eine REM-Aufnahme der Stärkefraktion nach der Mahlung mit einer Prallmühle in der ersten Stufe und mit einer Rührwerkskugelmühle in der zweiten Stufe. Es befinden sich dort nur noch wenige Anteile an Proteinen in der Stärkefraktion. Die Stärkekörner sind hier fast vollständig von Haftproteinen befreit. Es sind keine Proteinanteil zu finden, die nicht ausreichend zerkleinert wären. Die Stärkekörner der Fraktion sind nur geringfügig geschädigt.

Der Vorteil des erfindungsgemäßen Verfahrens ist in der hohen Proteinanreicherung einer Feingutfraktion zu sehen, wobei gegenüber der üblicherweise verwendeten Strahlmahlung, ohne wesentliche Qualitätseinbußen eine gleich hohe Ausbeute an Proteinen erzielt werden kann, jedoch mit wesentlich geringerem Energieaufwand.

## Patentansprüche

1. Verfahren zur Trennung von Cerealien, insbesondere Getreide und Hülsenfrüchte in eine proteinreiche und eine proteinarme Fraktion durch Mahlung und Windsichtung, bei dem in einem
ersten Verfahrensschritt eine Vormahlung durch Prallzerkleinerung mit anschließender ersten Trennung nach der Korngröße stattfindet wodurch eine erste Grobgutfraktion und eine erste Feingutfraktion erhalten wird und in einem folgendem
zweiten Verfahrensschritt eine selektive Mahlung der ersten Grobgutfraktion durch Druck- und Reibungsbeanspruchung in einer trockenen Rührwerkskugelmühle erfolgt und anschließend durch eine zweite Trennung nach der Korngröße eine zweite Grobgutfraktion und eine zweite Feingutfraktion erhalten wird,
wobei durch die geeignete Wahl der Sichtereinstellungen aus der ersten und zweiten Feingutfraktion ein Auszug eines Proteinkonzentrates von insgesamt 30 bis 60 Gew. % des Ausgangsproduktes erhalten wird, das einen Proteinanteil von 45 bis 68% Protein i. Tr. des so erhaltenen Konzentrates aufweist.

2. Verfahren nach Anspruch 1, dadurch gekennzeichnet, daß die Vormahlung in einer Prallmühle erfolgt.

3. Verfahren nach Anspruch 1 oder 2, dadurch gekennzeichnet, daß die Trennung nach der Korngröße durch Sichtung erfolgt.

4. Verfahren nach Anspruch 3, dadurch gekennzeichnet, daß der Sichter für die Trennung nach der Korngröße ein Windsichter ist.

5. Verfahren nach Anspruch 4, dadurch gekennzeichnet, daß der Windsichter ein Zentrifugalkraftwindsichter ist.

6. Verfahren nach Anspruch 1 oder 2, dadurch gekennzeichnet, daß die Trennung nach der Korngröße durch Sieben erfolgt.

7. Verfahren nach Anspruch 6, dadurch gekennzeichnet, daß die Siebung mit einem Luftstrahlsieb erfolgt.

8. Verfahren nach Anspruch 1 bis 7, dadurch gekennzeichnet, daß vor dem zweiten Verfahrensschritt eine Befeuchtung der Fraktionen stattfindet.

9. Verfahren nach Anspruch 1 bis 8, dadurch gekennzeichnet, daß Mahlperlen mit einem spezifischen Gewicht von 2,6 bis 7,0 kg/dm³ eingesetzt werden.

10. Verfahren nach Anspruch 1 bis 9, dadurch gekennzeichnet, daß die Rührwerkskugelmühle mit einem Füllungsgrad von 50 bis 60% Volumenanteil an Mahlperlen betrieben wird.

11. Verfahren nach Anspruch 1 bis 10, dadurch gekennzeichnet, daß die Mahlperlen einen Durchmesser von 2 bis 6 mm aufweisen.

## Claims

1. Process for separating cereals - especially grains and legumes - into a high-protein and a low-protein fraction by grinding and air classification, comprising:
a first processing step, wherein preliminary grinding is executed with an impact mill and an initial separation by particle size is effected which results in a first coarse fraction and a first fines fraction, and a following
second processing step, wherein selective grinding of the first coarse fraction is executed by means of compressive and frictional stress in a dry agitated pearl mill, and subsequently a second coarse fraction and a second fines fraction is produced by a second separation by particle size,
whereby a suitable selection of the classifier settings an extract of a protein-enriched product from the first and second fines fractions can be achieved totalling between 30 and 60 weight % of the feed product, and which displays a protein content ranging between 45 and 68% dry weight of the protein-enriched product thus extracted.

2. Process according to Claim 1, characterised in that preliminary comminution takes place in an impact mill.

3. Process according to Claim 1 or 2, characterised in that the separation by particle size is effected by means of classification.

4. Process according to Claim 3, characterised in that the classifier used for the separation by particle size is an air classifier.

5. Process according to Claim 4, characterised in that the classifier used is a centrifugal-force air classifier.

6. Process according to Claim 1 or 2, characterised in that the separation by particle size is effected by means of sieving.

7. Process according to Claim 6, characterised in that the sieving is executed with an air jet sieve.

8. Process according to Claims 1 - 7, characterised in that the fractions are moistened prior to the second processing step.

9. Process according to Claims 1 - 8, characterised in that grinding pearls with a specific weight of between 2.6 and 7.0 kg/dm³ are used.

10. Process according to Claims 1 - 9, characterised in that the agitated pearl mill is operated with a batch of grinding pearls which make up between 50 and 60 volume percent.

11. Process according to Claims 1 - 10, characterised in that the diameter of the grinding pearls is between 2 and 6 mm.

## Revendications

1. Procédé de séparation de grains, en particulier des céréales et des légumineuses, en deux fractions, l'une riche et l'autre pauvre en protéine, par broyage et sélection pneumatique caractérisé en ce sens que:
dans une première étape le produit d'alimentation soit broyé par impact et ensuite séparé en une première fraction de grosses et une fraction de fines,
dans une deuxième étape, la première fraction de grosses soit soumise à des contraintes de pression et de frottement dans un broyeur-agitateur à billes suivi d'une sélection pour obtenir une deuxième fraction de grosses et une autre de fines,
et que avec un choix judicieux des paramètres de sélection des fines de la première et deuxième étape on obtienne un concentré protéique total de l'ordre de 30 à 60% de poids du produit d'alimentation, le concentré ayant une teneur de 45 à 68 % de protéine dans la matière sèche.

2. Procédé selon la revendication 1, caractérisé en se sens que le premier broyage soit un broyage par impact.

3. Procédé selon les revendications 1 ou 2, caractérisé en se sens que la coupure granulométrique se fasse par sélection.

4. Procédé selon la revendication 3, caractérisé en se sens que le sélecteur soit un sélecteur pneumatique.

5. Procédé selon la revendication 4, caractérisé en se sens qu'une force centrifuge agisse dans le sélecteur pneumatique .

6. Procédé selon les revendications 1 ou 2, caractérisé en se sens que la coupure granulométrique se fasse par tamisage.

7. Procédé selon la revendication 6, caractérisé en se sens que le tamiseur soit un tamiseur pneumatique.

8. Procédé selon les revendications 1 à 7, caractérisé en se sens que les fraction soient humidifiées avant le deuxième broyage.

9. Procédé selon les revendications 1 à 8, caractérisé en se sens que les billes de broyage utilisées aient une densité de 2,6 à 7,0 kg/dm³.

10. Procédé selon les revendications 1 à 9, caractérisé en se sens que le broyeur-agitateur à billes ait un taux de remplissage en billes de l'ordre de 50 à 60 % du volume

11. Procédé selon les revendications 1 à 10, caractérisé en se sens que les billes de broyage utilisées aient un diamètre de l'ordre de 2 à 6 mm.
